# EUROPEAN PATENT SPECIFICATION

(11) **EP 2 348 593 B1**
(45) Date of publication and mention of the grant of the patent: **01.07.2015**
(21) Application number: 11151440.2
(22) Date of filing: 19.01.2011
(51) Int. Cl.: H02G 3/06, H02G 15/013

(54) **Sealing of fittings to cables, pipes and other lines**
Abdichtung von Fassungen für Kabel, Leitungen und andere Linien
Étanchéité de fixations pour câbles, conduits et autres tuyaux

(30) Priority: 20.01.2010 GB 201000860
(43) Date of publication of application: 27.07.2011
(73) Proprietor: Scientific Management Associates (UK) Limited, Andover SP10 5AZ (GB)
(72) Inventor: Wise, John Frederick Maurice, Bromley, BR2 7BD (GB)
(74) Representative: Roberts, Gwilym Vaughan

(56) References cited:
- DE-A1- 3 302 143
- GB-A- 732 371
- GB-A- 2 298 527
- US-A- 5 741 015

## Description

### DESCRIPTION

This invention is concerned with the sealing of fittings to cables, pipes and other lines. In particular the invention relates to: a method of sealing a line into a hole in a fitting; and an assembly of a line and a fitting.

When a cable is to pass through a hole in a wall of a pressure vessel (for example a submarine), the need arises to seal the cable to the wall of the pressure vessel, and this is conventionally done by sealing the cable to a hole in a fitting, and sealing the fitting to the wall of the pressure vessel. Similarly, when a cable is to pass through a hole in a wall of a housing containing equipment that is to be protected from the surrounding environment, the need arises to seal the cable to the wall of the housing, and this is conventionally done by sealing the cable to a hole in a fitting, and sealing the fitting to the wall of the housing.

One known method of such sealing employs an O-ring which is trapped between the sheath of the cable and a groove in the hole in the fitting. The wall of the O-ring is compressed radially between the sheath and the groove typically by about 10 to 20%. As a result, the wall of the O-ring is internally in compression radially and is internally in tension longitudinally, and the O-ring makes sealing contact with the cable sheath over a relatively narrow band in the longitudinal direction. The width of the band of contact can be increased by increasing the amount of compression, but it then becomes more difficult to fit the O-ring. There may be variations in the external diameter of different cables made to the same specification. Also, the external diameter of a particular cable may reduce over time due to creep. These variations in diameter combined with the relatively small initial compression of the O-ring can result in difficulties in achieving and maintaining an effective seal between the cable and the fitting.

Another known method of such sealing, cf. DE 3302143 A, employs a squash gland having a gland member surrounding the cable and disposed in a cavity. The volume of the gland cavity can be reduced, for example by turning a nut so as to squash the gland member and seal it to the cavity wall and to the cable. The band of contact of the gland member with the cable is typically substantially wider than is provided by a comparable O-ring arrangement and, by contrast with the O-ring, the gland member is internally in compression both radially and longitudinally. The gland member is typically of rubber which is substantially incompressible in volume. Therefore if the volume occupied by the gland member increases slightly in volume, for example due to creep in the diameter of the cable, the compressive forces and the effectiveness of the seal will be reduced drastically.

An aim of the present invention, or at least specific embodiments of it, is to enable a seal between a line (such as a flexible or rigid electrical cable, fibre optic cable or pipe) and a fitting to be effectively achieved and maintained.

In accordance with a first aspect of the invention, there is provided an assembly of a line and a fitting, wherein: the fitting has a hole into which the line is inserted; and an elongate resilient sleeve is disposed in the hole and has a wall encircling the line such that: internally the wall is radially in compression between the line and the fitting so as to seal the line to the fitting; and internally the wall is longitudinally in tension.

The assembly of the first aspect of the invention therefore resembles a known O-ring arrangement to some extent, in that internally the wall of the sealing member is radially in compression and longitudinally in tension. However, the sealing member is provided by an elongate sleeve, rather than by an O-ring, so that substantially wider bands of contact can be provided between the sealing member and the cable or the like and the fitting.

The assembly of the first aspect of the invention also resembles a known squash gland arrangement to some extent, in that wide bands of contact can be achieved. However, the sealing member of the first aspect of the invention is internally longitudinally in tension, rather than in compression, and does not rely on an externally applied longitudinal compressive force in order to maintain the contact pressure with the fitting and the cable or the like.

It should be noted that assembling the fitting cable and sleeve so as to provide the require compression in the sleeve without the sleeve rucking up during insertion is not necessarily so trivial as fitting an O-ring. However, a method of assembly is the subject of a second aspect of the invention and will be discussed later.

The material of the sleeve preferably has a Poisson's ratio substantially equal to one half (for example greater than 0.40 and more preferably greater than 0.45) or in other words is substantially incompressible in volume. In preferred embodiments, the sleeve is formed from silicone rubber.

The length of the sleeve that is compressed in the hole between the line and the fitting is preferably substantially greater than the wall thickness of the sleeve between the line and the fitting, for example at least twice the wall thickness of the sleeve between the line and the fitting and more preferably at least three, four, five or more times the wall thickness of the sleeve between the line and the fitting.

The assembly preferably further includes an abutment fixed relative to the fitting and engaging a portion of the line so as to prevent longitudinal movement of that portion of the line beyond the abutment. Such an abutment can be employed to prevent the line being extruded through the hole into the fitting as a result of high hydrostatic pressures outside the fitting. The same, or a separate, abutment preferably engages an end of the sleeve so as to prevent longitudinal movement of that end of the sleeve beyond the abutment. Such an abutment can be employed to prevent the sleeve being displaced through the hole into the fitting as a result of high hydrostatic pressures outside the fitting.

Preferably, a portion of the sleeve at an end of the sleeve is not compressed between the line and the fitting. This portion will bulge due to the lack of compression and can provide a separate sealing effect.

The fitting may be a substantially rigid sleeve which is bonded to a further fitting.

In accordance with a second aspect of the present invention, there is provided a method of sealing a line (such as an electrical cable, a fibre optic cable or a pipe) into a hole in a fitting. The method comprises the steps of: providing a resilient sleeve having a wall thickness and a longitudinal axis; inserting the line into the sleeve; applying an external tension longitudinally of the sleeve so that the sleeve extends longitudinally and so that the wall thickness of the sleeve reduces; inserting the line and the externally tensioned sleeve into the hole in the fitting; and removing the external longitudinal tension. As a result: the sleeve contracts longitudinally; the wall thickness of the sleeve increases; internally the sleeve becomes radially in compression in the hole between the line and the fitting; and internally the sleeve remains longitudinally in tension.

The sleeve preferably has a relaxed internal diameter, during the step of inserting the line into the sleeve, which is greater than the external diameter of the line, so as to facilitate insertion.

The sleeve preferably has an external diameter, during the step of inserting the line and sleeve into the hole, which is less than the internal diameter of the hole, so as to facilitate insertion.

Preferably, the sleeve is formed by a portion of a length of sleeving, and the method includes the step of cutting the sleeve from the remainder of the length of sleeving after the step of inserting the line and sleeve into the hole.

The method preferably further includes the step of clamping the sleeve to the line at one position on the line prior to the step of applying the external tension to the sleeve, with the tension applying step being performed by applying a tension between the line and a portion of the sleeve remote from said one position.

Specific embodiments of the present invention will now be described, purely by way of example, with reference to the accompanying drawings, in which:
- Figure 1: is a side view of an assembled cable, fitting and sealing arrangement of a first embodiment of the invention, the fitting and sealing arrangement being longitudinally sectioned;
- Figures 2A & B: are side and cross-sectioned views of the cable used in the first embodiment;
- Figures 3A & B: are longitudinally-sectioned and cross-sectioned views of a resilient sleeve of the sealing arrangement of Figure 1, when relaxed;
- Figures 4A & B: are longitudinally-sectioned and cross-sectioned views of the resilient sleeve when deformed;
- Figures 5A & B: are longitudinally-sectioned and cross-sectioned views of a rigid sleeve of the sealing arrangement of Figure 1;
- Figures 6A-K: are longitudinally-sectioned views showing stages in the assembly of the cable, fitting and sealing arrangement of Figure 1; and
- Figure 7: is a side view of an assembled cable, fitting and sealing arrangement of a second embodiment of the invention, the fitting and sealing arrangement being longitudinally sectioned;
- Figures 8A-F: are longitudinally-sectioned views showing stages in the assembly of the cable, fitting and sealing arrangement Figure 7.

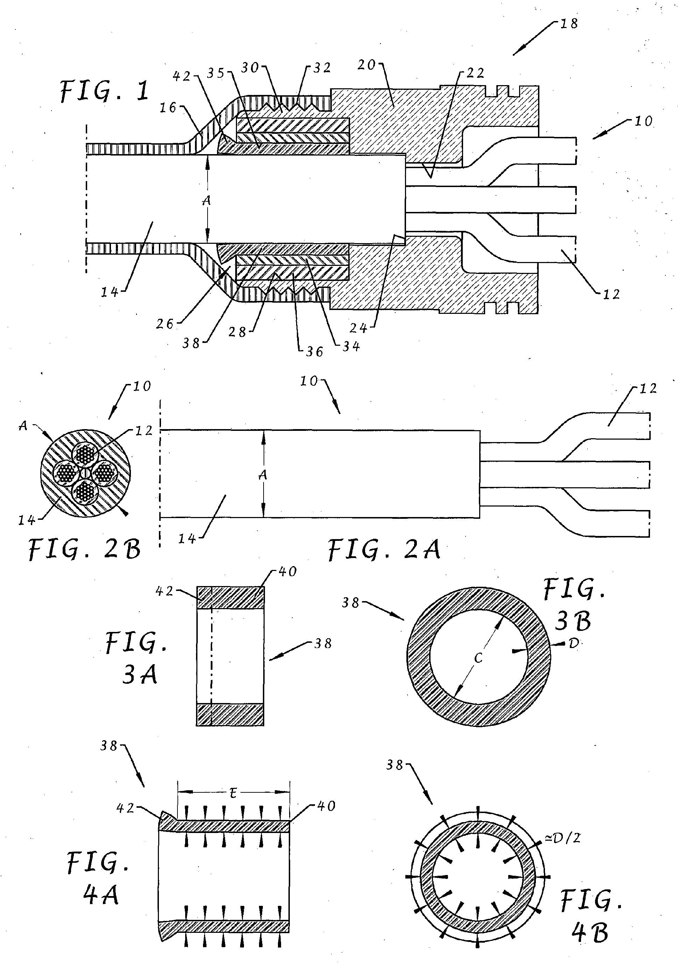

Referring to Figures 1 to 2B of the drawings an electrical cable 10 has, for example, four independently-insulated electrical cores 12, a common inner sheath 14 of polyethylene (PE) and a common outer sheath 16 of polyurethane (PU), although other material such as polyethylene (PE), or polyvinylchloride (PVC) could be employed. The exterior surface of the inner sheath 14 is generally circular in cross-section, as can be seen in Figure 2B, having a diameter A. However, there may be some ripple in the periphery of the inner sheath 14.

Referring to Figure 1, in the first embodiment of the invention, the end of the cable 10 is connected to a fitting 18 having a body 20 which is cast and machined from bronze. The remainder of the fitting 18 (to which the cores 12 of the cable 10 may, for example, be electrically connected) is not shown in the drawings. The cores 12 pass through a though-hole 22 in the body 20. The inner sheath 14 passes part-way though the hole 22 up to an abutment shoulder 24. The outer surface of the inner sheath 14 is sealed to the body 20 by a sealing arrangement 26 between the outer surface of the inner sheath 14 and a counterbore 28 in the body 20. The outer sheath 16 is sealed to the body 20 in a manner known per se by having its end moulded around and chemically bonded to a spigot 30 of the body 20 surrounding the counterbore 28. The spigot 30 has external annular grooves and ridges 32 to promote good bonding and sealing between the outer sheath 16 and the spigot 30.

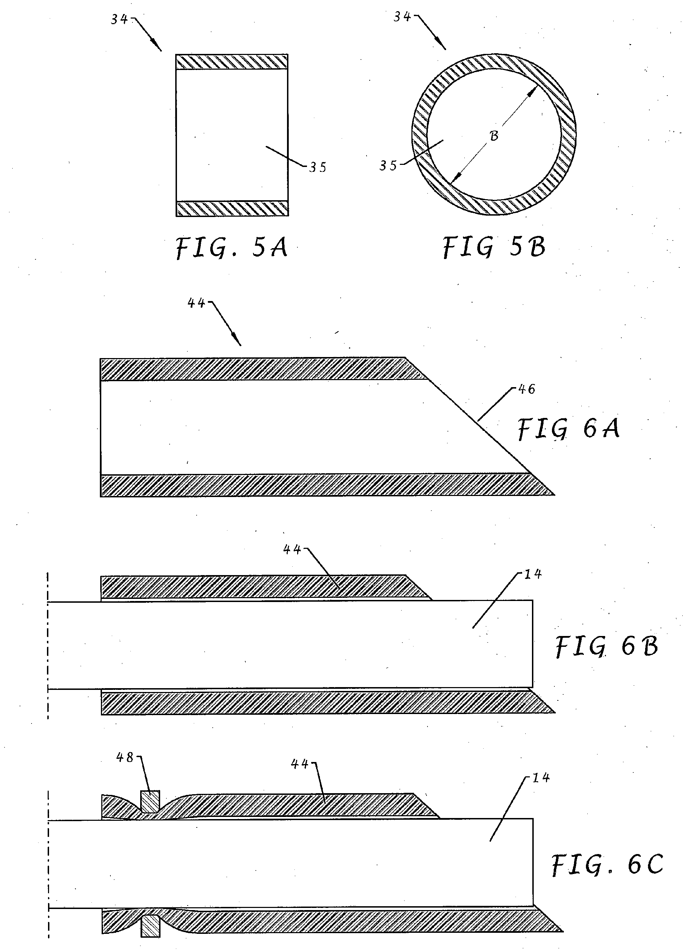

The sealing arrangement 26 for the inner sheath 14 comprises a sleeve 34 (see also Figures 5A & B) that is bonded substantially coaxially in the counterbore 28 of the body 20 by an annular layer 36 of cold cast polyurethane (PU) or other thermoset plastics material. The sleeve 34 is substantially rigid and may be made from, for example, polyether-ether-ketone (PEEK) having a typical Young's modulus of 3.7 GPa and a typical Shore hardness of D85. The rigid sleeve 34 has an internal diameter B of its hole 35 which is larger than the external diameter A of the inner sheath 14. The inner surface of the rigid sleeve 34 is therefore spaced radially from the outer surface of the inner sheath 14 of the cable 10 by a distance of approximately (B-A)/2. The sleeve 34 extends in the axial direction over the whole extent of the counterbore 28.

The space between the inner surface of the rigid sleeve 34 and the outer surface of the inner sheath 14 is filled with a sleeve 38 which is resilient, highly compliant and substantially incompressible in volume, for example silicone rubber having a typical Shore hardness of A50 and a Poisson's ratio of 0.48 or 0.49, approaching the limit of 0.5. Referring to Figure 3B, the compliant sleeve 38, when relaxed, has an internal diameter C which is slightly greater than the outer diameter A of the inner sheath 14 of the cable 10 and a wall thickness D which is, for example, double the radial space between the inner surface of the rigid sleeve 34 and the outer surface of the inner sheath 14, i.e. D ≃ (B-A). Therefore, when the compliant sleeve 38 is fitted, it is deformed so that, as shown in Figures 1, 4A & B, its wall thickness reduces to about D/2, i.e. about one half of its relaxed wall thickness D. As a result, the length of the portion of the compliant sleeve 38 that is trapped between the inner surface of the rigid sleeve 34 and the outer surface of the inner sheath 14 increases by a factor of about two, as can be seen by comparing Figures 3A and 4A. The length E of the portion 40 of the compliant sleeve 38 that is trapped between the inner surface of the rigid sleeve 34 and the outer surface of the inner sheath 14 is: (i) of the same order of magnitude as, and approximately equal to, the internal diameter B of the rigid sleeve 34; and (ii) several times greater than the compressed wall thickness (≃D/2) of the compliant sleeve 38. The overall length of the compliant sleeve 38 is chosen so that a small portion 42 of it projects beyond the rigid sleeve 34 when the compliant sleeve 38 is fitted.

It will be appreciated that, due to the deformation of the compliant sleeve 38 and its length, it will make good contact with the inner surface of the rigid sleeve 34 and the outer surface of the inner sheath 14 over a substantial area. In the event that the diameter of the inner sheath 14 of the cable 10 reduces slightly due to creep, the inner diameter of the compliant sleeve 38 will reduce correspondingly so as to maintain the contact. Also, any hydrostatic pressure applied to the left end of the sealing arrangement 26 (as viewed in Figure 1) will tend to urge the compliant sleeve 38 deeper into its space and thus increase the pressure that it applies to the inner surface of the rigid sleeve 34 and the outer surface of the inner sheath 14 of the cable 10. Movement of the cable 10 to the left (as viewed in Figure 1) which might result from hydrostatic pressure applied to the cable 10 is resisted by the engagement of the end of the inner sheath 14 of the cable 10 with the abutment shoulder 24.

A method of assembling the cable 10, fitting 18 and sealing arrangement 26 will now be described with reference to Figures 6A-K.

Referring to Figure 6A, a piece of sleeving 44 for forming the compliant sleeve 38 is cut to a length about four or more times the length of the E of the portion 40 of the complaint sleeve 38, with one end 46 being cut at an angle. The length of the sleeving 44 may be considerably more than 4xE to facilitate the gripping and stretching of the sleeving 44 as will be described below. Referring to Figure 6B, the cable 10 (excluding the outer sheath 16) with its end cut square is inserted into the sleeving 44. As shown in Figure 6C, the sleeving 44 adjacent its square-cut end is temporarily clamped onto the inner sheath 14 of the cable 10 by a clamp 48.

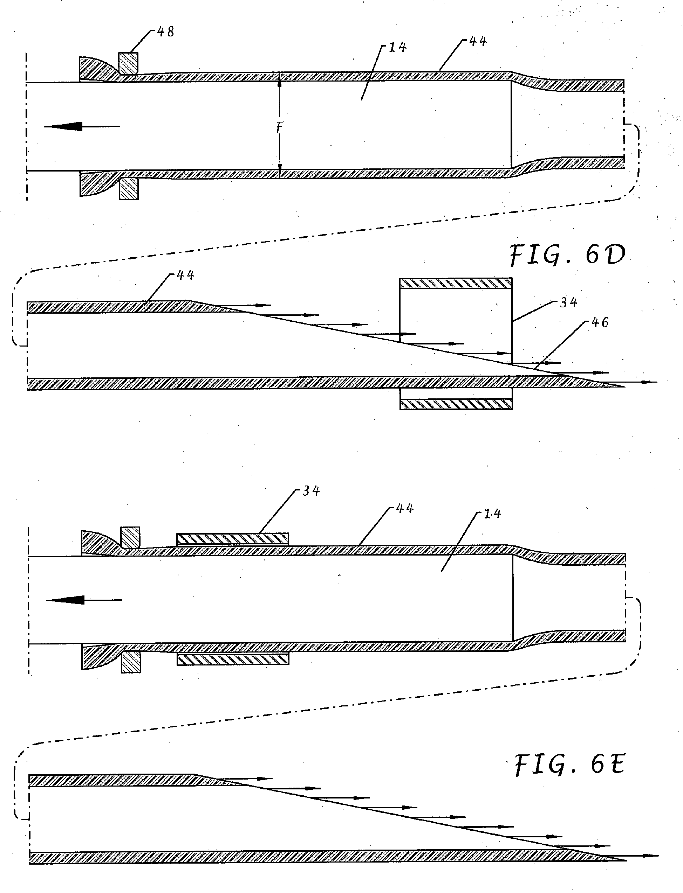

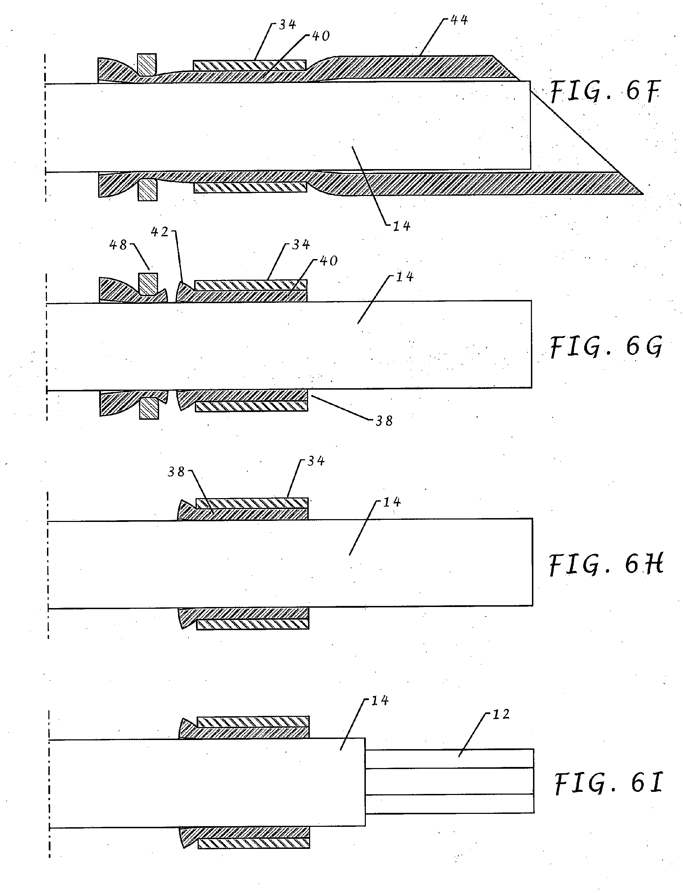

Referring to Figure 6D, the sleeving 44 is placed in tension longitudinally to that it extends in length and so that its external diameter F between the clamp 48 and the end of the inner sheath 14 becomes less than the internal diameter B of the rigid sleeve 34, and the angled end 46 of the sleeving 44 is threaded through the rigid sleeve 34. There may be a tendency for the inner surface of the sleeving 44 to grip the external surface of the inner sheath 14 of the cable 10 so that the sleeving 44 does not extend uniformly. In this case, the sleeving 44 may be manipulated by hand to encourage it to extend along the inner sheath 14. Alternatively, air pressure may be applied inside the sleeving 44 so that it balloons out slightly and loses its grip on the inner sheath 14. Referring to Figure 6E, the rigid sleeve 34 is slid along the sleeving 44 and placed in its required position relative to the end of the inner sheath 14 of the cable 10. Then, referring to Figure 6F, the tension in the sleeving 44 is relaxed, while the rigid sleeve 34 is maintained in position. As a result, the sleeving 44 decreases in length and expands in wall thickness, and a portion 40 of the sleeving becomes trapped between the inner surface of the rigid sleeve 34 and the outer surface of the inner sheath 14 of the cable 10.

Referring to Figure 6G, the sleeving 44 is then cut flush with the right end (as seen in the drawing) of the rigid sleeve 34, and the surplus sleeving 44 is removed. Also, the sleeving 44 is cut between the clamp 48 and the rigid sleeve 34 so as to form the projecting portion 42 of the complaint sleeve 38. Then, as shown in Figure 6H, the clamp 48 and the remaining portion of sleeving 44 clamped by it may, if desired, be removed. Also, as shown in Figure 6I, a portion of the inner sheath 14 is stripped from the cores 12.

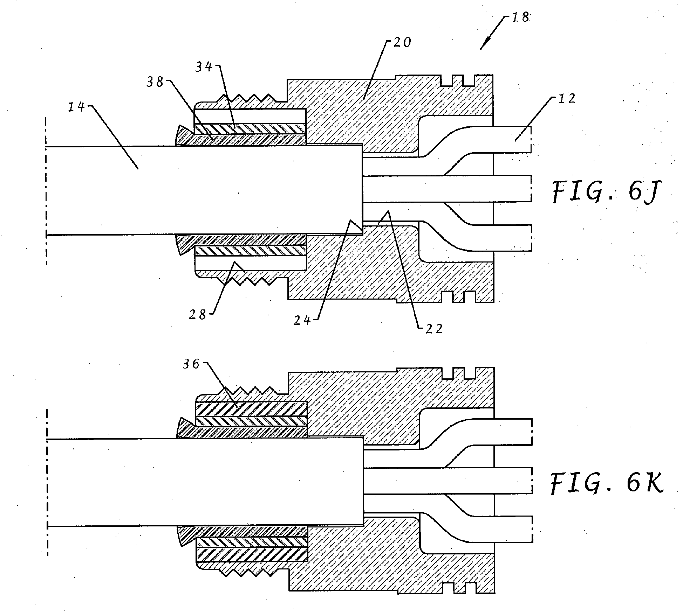

Referring to Figure 6J, the exposed cores 12 are inserted through the hole 22 through the body 20 of the fitting 18, so that the end of the inner sheath 14 engages the abutment shoulder 24 of the body 20 and so that the compliant and rigid sleeves 34,38 become accommodated in the counterbore 28 of the body 20. The cores 12 may be connected at this stage to the remainder (not shown) of the fitting 18. The space between the outer surface of the rigid sleeve 34 and the inner surface of the counterbore 28 is then filled with liquid cold cast polyurethane (PE) or other thermoset plastics material, for example by injection, and the polyurethane is allowed to cure so as to form the annular layer 36, as shown in Figure 6K. The outer sheath 16 is then moulded onto the inner sheath 14 and the spigot 30 of the body 20 in the conventional manner, to form the completed assembly as shown in Figure 1.

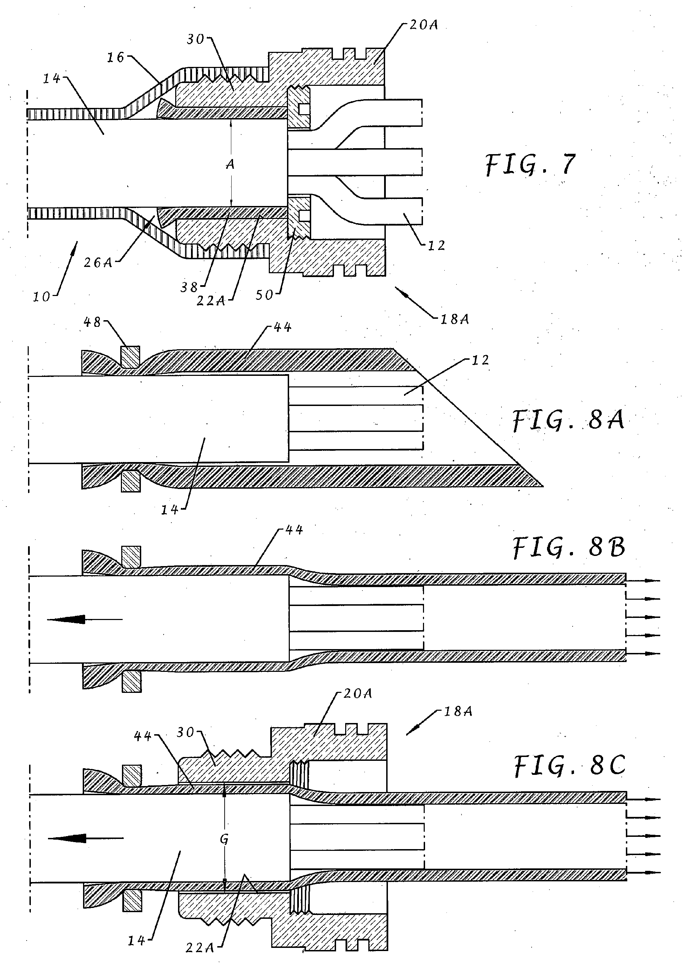

A method of assembling the cable 10 with a modified fitting 18A and sealing arrangement 26A of a second embodiment of the invention will now be described with reference to Figures 7 and 8A-F.

The main differences between the first and second embodiments of the invention are that, in the second embodiment: (i) the rigid sleeve 34 and bonding layer 36 are omitted and instead the compliant sleeve 38 directly engages the wall of the hole 22A through the body 20A of the fitting 18A; and (ii) the abutment of the end of the inner sheath 14 of the cable 10 is provided by a separate abutment ring 50.

In order to assemble the assembly of Figure 7, as shown in Figure 8A, a portion of the inner sheath 14 is stripped from the end of the cable to expose the cores 12, and the end of the cable is inserted into the compliant sleeving 44 and clamped by the clamp 48, in the manner described above with reference to Figure 6C. Referring to Figure 8B, the sleeving 44 is then placed under tension, as described above with reference to Figure 6D. Then, as shown in Figure 8C, the body 20A of the fitting 18A is slid along the tensioned sleeving 44, in a similar manner to that described above with reference to Figure 6E in connection with the rigid sleeve 34 of the first embodiment. In the case of the second embodiment, however, the body 20A does not have an abutment shoulder 24, and the spigot 30 of the body 20A is not counterbored to receive the sealing arrangement 26A. The diameter G of the hole 22A through the body 20A is similar to the inner diameter B of the rigid sleeve 34 in the first embodiment. The body 20A is positioned on the sleeving 44 so that the end of the inner sheath 14 is level with the right end of the hole 22A.

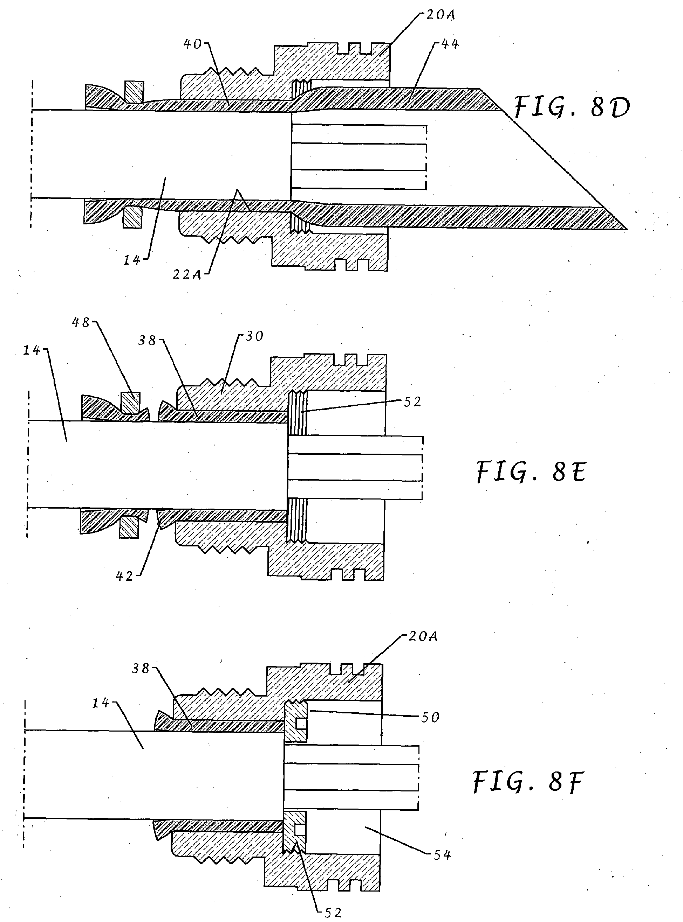

The tension in the sleeving 44 is then released, as shown in Figure 8D, while the body 20A is maintained in position. As a result, the sleeving 44 decreases in length and expands in wall thickness, and a portion 40 of the sleeving 44 becomes trapped between the surface of the hole 22A and the outer surface of the inner sheath 14. Referring to Figure 8E, the sleeving 44 is then cut flush with the right end (as seen in the drawing) of the inner sheath 14, for example using a knife with the tip of its blade bent at a right angle, and the surplus sleeving 44 is removed. Also, the sleeving 44 is cut between the clamp 48 and the spigot 30 so as to form the projecting portion 42 of the complaint sleeve 38. Then, as shown in Figure 8F, the clamp 48 and the remaining portion of sleeving 44 clamped by it may, if desired, be removed. Also, as shown in Figure 8F, an externally screw-threaded abutment ring 50 is fitted to a complementary screw thread 52 in the cavity 54 of the body 20A and engages the right ends (as seen in the drawings) of the complaint sleeve 38 and the inner sheath 14. Then, the outer sheath 16 is moulded onto the inner sheath 14 and the spigot 30 of the body 20A in the conventional manner, to form the completed assembly as shown in Figure 7.

As an alternative to using a screw-threaded abutment ring 50, the abutment may be provided by a circlip or by a hard resin fill in at least the left part of the cavity 54.

It will be noted that the sealing arrangements 26,26A described above provide sealing contact with the inner sheath 14 of the cable 10 and with the rigid sleeve 34 or the body 20A over a substantial extent E in the longitudinal direction. By comparison, a conventional O-ring provides sealing contact at a point or over a very narrow band in the longitudinal direction. Also, it will be noted that the wall thickness of the compliant sleeve 38 is compressed by a substantial amount, i.e. to about 50% of its relaxed wall thickness (although other amounts for example in the range of 40 % to 60 % may be employed). Therefore, the sealing arrangements 26,26A can be effective despite variations in the initial diameter A of the inner sheath 14 of various cables 10 and variations over time due to creep of the diameter A of the inner sheath 14 of a particular cable 10. By comparison, a conventional O-ring is typically compressed to only 10 to 20 % of its relaxed wall thickness and therefore cannot cope so well with variations in sheath diameter A.

It will also be noted that the sealing arrangements 26,26A described above differ in nature from a conventional squash gland in which external compressive forces are applied to the whole surface area of the gland member, and therefore internally the gland member is in compression in all directions. The gland member is typically of rubber which is substantially incompressible in volume. Therefore if the cavity occupied by the gland member increases slightly in volume, for example due to creep in the diameter of the cable, the compressive forces and the effectiveness of the seal will be reduced drastically. By comparison, in the sealing arrangements 26,26A described above, the wall of the compliant sleeve 38 is internally in compression radially but is internally in tension longitudinally and relies on its own resilience and lack of substantial compressibility in volume to maintain pressure against the inner sheath 14 of the cable 10 and the rigid sleeve 34 or the body 20A. In the event that the inner sheath 14 of the cable 10 reduces in diameter due to creep, the wall of the compliant sleeve 38 automatically increases in wall thickness (and reduces in length) so that the effectiveness of the seal is reduced far less than in the case of a comparable squash gland.

It will be appreciated that many modifications and developments may be made to the embodiments of the invention described above. For example, the sealing arrangements 26,26A may be employed with single-sheathed cables, in which case the provision for sealing an outer sheath to the body 20,20A is omitted. The sealing arrangements 26,26A may be used to seal other types of line to a fitting, for example an optical fibre cable, a rigid pipe and a flexible hose.

It should be noted that the embodiments of the invention have been described above purely by way of example and that many other modifications and developments may be made thereto within the scope of the present invention as defined by the claims.

## Claims

1. A method of sealing a line (14) into a hole (35;22A) in a fitting (34;18A), the method comprising the steps of:
providing a resilient sleeve (38) having a wall thickness and a longitudinal axis;
inserting the line into the sleeve; and
applying an external tension longitudinally of the sleeve so that the sleeve extends longitudinally and so that the wall thickness of the sleeve reduces; **characterised by** inserting the line and the externally tensioned sleeve into the hole in the fitting; and
removing the external longitudinal tension so that:
the sleeve contracts longitudinally;
the wall thickness of the sleeve increases;
internally the sleeve becomes radially in compression in the hole between the line and the fitting; and
internally the sleeve remains longitudinally in tension.

2. A method as claimed in any claim 1, wherein:
the sleeve is formed of a material having a Poisson's ratio substantially equal to one half.

3. A method as claimed in claim 1 or 2, wherein:
the sleeve is formed from silicone rubber.

4. A method as claimed in any preceding claim, wherein:
the length of the sleeve that becomes compressed in the hole between the line and the fitting is substantially greater than the compressed wall thickness of the sleeve between the line and the fitting.

5. A method as claimed in any preceding claim, wherein:
the sleeve has a relaxed internal diameter, during the step of inserting the line into the sleeve, which is greater than the external diameter of the line.

6. A method as claimed in any preceding claim, wherein:
the sleeve has an external diameter, during the step of inserting the line and sleeve into the hole, which is less than the internal diameter of the hole.

7. A method as claimed in any preceding claim, wherein:
the method further includes the step of clamping the sleeve to the line at one position (48) on the line prior to the step of applying the external tension to the sleeve; and the tension applying step is performed by applying a tension between the line and a portion of the sleeve remote from said one position.

8. A method as claimed in any preceding claim, further including the step of:
engaging a portion of the line with an abutment (24;50) fixed relative to the fitting so as to prevent longitudinal movement of that portion of the line beyond the abutment.

9. A method as claimed in any preceding claim, further including the step of:
engaging an end of the sleeve with a, or the, abutment (24;50) fixed relative to the fitting so as to prevent longitudinal movement of that end of the sleeve beyond the abutment.

10. A method as claimed in any preceding claim, further including the step of:
providing a portion (42) of the sleeve at an end of the sleeve which is not compressed between the line and the fitting.

11. A method as claimed in any preceding claim, wherein:
the fitting is a substantially rigid sleeve (34); and
the method further includes the step of bonding the substantially rigid sleeve to a further fitting (18).

12. An assembly of a line (14) and a fitting (34;18A), wherein:
the fitting has a hole (35;22A) into which the line is inserted; and
an elongate resilient sleeve (38) is disposed in the hole and has a wall encircling the line such that:
internally the wall is radially in compression between the line and the fitting so as to seal the line to the fitting; chararcterised by
internally the wall is longitudinally in tension.

13. An assembly as claimed in claim 12, wherein:
the length of the sleeve that is compressed in the hole between the line and the fitting is substantially greater than the wall thickness of the sleeve between the line and the fitting.

14. An assembly as claimed in claim 12 or 13, wherein:
a portion (42) of the sleeve at an end of the sleeve is not compressed between the line and the fitting.

15. An assembly as claimed in any of claims 12 to 14, wherein:
the fitting is a substantially rigid sleeve (34) which is bonded to a further fitting (18).

## Patentansprüche

1. Verfahren zum Abdichten einer Leitung (14) in einer Öffnung (35; 22A) in einem Fitting (34; 18A), wobei das Verfahren folgende Schritte umfasst:
Bereitstellen einer elastischen Hülse (38) mit einer Wandstärke und einer Längsachse;
Einsetzen der Leitung in die Hülse; und
Aufbringen einer externen Spannung in die Längsrichtung auf die Hülse, sodass sich die Hülse in der Längsrichtung ausdehnt und sodass sich die Wandstärke der Hülse verringert; **gekennzeichnet durch**
Einsetzen der Leitung und der extern gespannten Hülse in die Öffnung im Fitting; und
Aufheben der externen Spannung in die Längsrichtung, sodass:
sich die Hülse in der Längsrichtung zusammenzieht;
sich die Wandstärke der Hülse erhöht;
die Hülse beim Zusammendrücken in der Öffnung zwischen der Leitung und dem Fitting intern radial wird; und
die Hülse unter Spannung intern längs verlaufend bleibt.

2. Verfahren nach Anspruch 1, wobei:
die Hülse aus einem Material mit einer Poissonzahl gebildet ist, die im Wesentlichen gleich 0,5 ist.

3. Verfahren nach Anspruch 1 oder 2, wobei:
die Hülse aus Silikonkautschuk gebildet ist.

4. Verfahren nach einem der vorhergehenden Ansprüche, wobei:
die Länge der Hülse, die in der Öffnung zwischen der Leitung und dem Fitting zusammengedrückt wird, im Wesentlichen größer als die zusammengedrückte Wandstärke der Hülse zwischen der Leitung und dem Fitting ist.

5. Verfahren nach einem der vorhergehenden Ansprüche, wobei:
die Hülse beim Schritt des Einsetzens der Leitung in die Hülse einen entspannten Innendurchmesser hat, der größer als der Außendurchmesser der Leitung ist.

6. Verfahren nach einem der vorhergehenden Ansprüche, wobei:
die Hülse beim Schritt des Einsetzens der Leitung und der Hülse in die Öffnung einen Außendurchmesser hat, der geringer als der Innendurchmesser der Öffnung ist.

7. Verfahren nach einem der vorhergehenden Ansprüche, wobei:
das Verfahren des Weiteren den Schritt des Klemmens der Hülse an die Leitung an einer Position (48) an der Leitung vor dem Schritt des Aufbringens der externen Spannung auf die Hülse aufweist; und
der Schritt des Aufbringens der Spannung durchgeführt wird, indem eine Spannung zwischen der Leitung und einem von der einen Position entfernten Teil der Hülse aufgebracht wird.

8. Verfahren nach einem der vorhergehenden Ansprüche, des Weiteren aufweisend den folgenden Schritt:
Ergreifen eines Teils der Leitung mit einem Widerlager (24; 50), das relativ zum Fitting fixiert ist, sodass eine Längsbewegung jenes Teils der Leitung über das Widerlager hinaus verhindert wird.

9. Verfahren nach einem der vorhergehenden Ansprüche, des Weiteren aufweisend den folgenden Schritt:
Ergreifen eines Endes der Hülse mit einem oder dem Widerlager (24; 50), das relativ zum Fitting fixiert ist, sodass eine Längsbewegung jenes Endes der Hülse über das Widerlager hinaus verhindert wird.

10. Verfahren nach einem der vorhergehenden Ansprüche, des Weiteren aufweisend den folgenden Schritt:
Bereitstellen eines Teils (42) der Hülse an einem Ende der Hülse, der nicht zwischen der Leitung und dem Fitting zusammengedrückt wird.

11. Verfahren nach einem der vorhergehenden Ansprüche, wobei:
das Fitting eine im Wesentlichen starre Hülse (34) ist; und
das Verfahren des Weiteren den Schritt des Bindens der im Wesentlichen starren Hülse an ein weiteres Fitting (18) aufweist.

12. Baugruppe aus einer Leitung (14) und einem Fitting (34; 18A), wobei:
das Fitting eine Öffnung (35; 22A) hat, in die die Leitung eingesetzt wird; und
eine längliche elastische Hülse (38) in der Öffnung angeordnet ist und eine Wand hat, die die Leitung umringt, sodass:
die Wand beim Zusammendrücken zwischen der Leitung und dem Fitting intern radial ist, um die Leitung an das Fitting zu dichten; **dadurch gekennzeichnet, dass**
die Wand unter Spannung intern längs verlaufend ist.

13. Baugruppe nach Anspruch 12, wobei:
die Länge der Hülse, die in der Öffnung zwischen der Leitung und dem Fitting zusammengedrückt wird, im Wesentlichen größer als die Wandstärke der Hülse zwischen der Leitung und dem Fitting ist.

14. Baugruppe nach Anspruch 12 oder 13, wobei:
ein Teil (42) der Hülse an einem Ende der Hülse nicht zwischen der Leitung und dem Fitting zusammengedrückt wird.

15. Baugruppe nach einem der Ansprüche 12 bis 14, wobei:
das Fitting eine im Wesentlichen starre Hülse (34) ist, die an ein weiteres Fitting (18) gebunden ist.

## Revendications

1. Procédé d'étanchéité d'un tuyau (14) dans un trou (35 ; 22A) dans une fixation (34 ; 18A), le procédé comprenant les étapes consistant à :
fournir un manchon résilient (38) ayant une épaisseur de paroi et un axe longitudinal ;
insérer le tuyau dans le manchon ; et
appliquer une tension externe dans le sens de la longueur du manchon de telle sorte que le manchon s'étende dans le sens de la longueur et de telle sorte que l'épaisseur de la paroi du manchon diminue ;
**caractérisé par**
l'insertion du tuyau et du manchon se trouvant sous une tension externe dans le trou dans la fixation ; et
la suppression de la tension longitudinale externe de telle sorte que :
le manchon se contracte dans le sens de la longueur ;
l'épaisseur de la paroi du manchon augmente ;
à l'intérieur le manchon devienne radialement en compression dans le trou entre le tuyau et la fixation ; et
à l'intérieur le manchon reste sous tension dans le sens de la longueur.

2. Procédé selon la revendication 1, dans lequel :
le manchon est formé d'un matériau ayant un coefficient de Poisson sensiblement égal à un-demi.

3. Procédé selon la revendication 1 ou 2, dans lequel :
le manchon est formé de caoutchouc de silicone.

4. Procédé selon l'une quelconque des revendications précédentes, dans lequel :
la longueur du manchon qui devient comprimé dans le trou entre le tuyau et la fixation est sensiblement supérieure à l'épaisseur de paroi comprimée du manchon entre le tuyau et la fixation.

5. Procédé selon l'une quelconque des revendications précédentes, dans lequel :
le manchon a un diamètre interne détendu, durant l'étape d'insertion du tuyau dans le manchon, qui est supérieur au diamètre externe du tuyau.

6. Procédé selon l'une quelconque des revendications précédentes, dans lequel :
le manchon a un diamètre externe, durant l'étape d'insertion du tuyau et du manchon dans le trou, qui est inférieur au diamètre interne du trou

7. Procédé selon l'une quelconque des revendications précédentes, dans lequel :
le procédé comprend en outre l'étape consistant à serrer le manchon sur le tuyau en une position (48) sur le tuyau avant l'étape d'application de la tension externe sur le manchon ; et
l'étape consistant à appliquer une tension est réalisée en appliquant une tension entre le tuyau et une partie du manchon à distance de ladite une position.

8. Procédé selon l'une quelconque des revendications précédentes, comprenant en outre l'étape consistant à :
engager une partie du tuyau avec une butée (24 ; 50) fixée par rapport à la fixation de manière à empêcher tout déplacement longitudinal de cette partie du tuyau au-delà de la butée.

9. Procédé selon l'une quelconque des revendications précédentes, comprenant en outre l'étape consistant à :
engager une extrémité du manchon avec une, ou la, butée (24 ; 50) fixée par rapport à la fixation de manière à empêcher tout déplacement longitudinal de cette extrémité du manchon au-delà de la butée

10. Procédé selon l'une quelconque des revendications précédentes, comprenant en outre l'étape consistant à :
fournir une partie (42) du manchon à une extrémité du manchon qui n'est pas comprimée entre le tuyau et la fixation.

11. Procédé selon l'une quelconque des revendications précédentes, dans lequel :
la fixation est un manchon sensiblement rigide (34) ; et
le procédé comprend en outre l'étape consistant à coller le manchon sensiblement rigide sur une autre fixation (1 8).

12. Ensemble composé d'un tuyau (14) et d'une fixation (34 ; 18A), dans lequel :
la fixation a un trou (35 ; 22A) dans lequel le tuyau est inséré ; et
un manchon résilient allongé (38) est disposé dans le trou et a une paroi encerclant le tuyau de telle sorte que :
à l'intérieur, la paroi se trouve radialement en compression entre le tuyau et la fixation de manière à rendre étanche le tuyau par rapport à la fixation ; **caractérisé en ce que**,
à l'intérieur, la paroi est sous tension dans le sens de la longueur.

13. Ensemble selon la revendication 12, dans lequel :
la longueur du manchon qui est comprimé dans le trou entre le tuyau et la fixation est sensiblement supérieure à l'épaisseur de paroi du manchon entre le tuyau et la fixation.

14. Ensemble selon la revendication 12 ou 13, dans lequel :
une partie (42) du manchon à une extrémité du manchon n'est pas comprimée entre le tuyau et la fixation.

15. Ensemble selon l'une des revendications 12 à 14, dans lequel :
la fixation est un manchon sensiblement rigide (34) qui est collé sur une autre fixation (1 8).
